# EUROPEAN PATENT SPECIFICATION

(11) **EP 2 397 371 B1**
(45) Date of publication and mention of the grant of the patent: **16.01.2013**
(21) Application number: 10425208.5
(22) Date of filing: 17.06.2010
(51) Int. Cl.: B60R 7/06, H01H 85/20, B60K 37/00, B60R 11/00

(54) **Dashboard of a vehicle, in particular of an industrial vehicle**
Armaturenbrett eines Fahrzeugs, insbesondere eines industriellen Fahrzeugs
Tableau de bord de véhicule, en particulier d'un véhicule industriel

(43) Date of publication of application: 21.12.2011
(73) Proprietor: Iveco S.p.A., 10156 Torino (IT)
(72) Inventor: Raviola, Claudio, 10040 Rivalta di Torino (IT); Guarino, Salvatore, 10044 Pianezza (IT)
(74) Representative: Borsano, Corrado

(56) References cited:
- EP-A1- 1 048 525
- EP-A1- 1 193 129
- DE-A1- 3 833 499
- DE-A1-102005 057 215
- DE-A1-102008 026 359

## Description

### Field of the invention

The present invention refers to a dashboard of a vehicle, in particular of an industrial vehicle.

### Description of the prior art

The access to the fuse panel and to the connectors of the vehicle control unit is realized inside the vehicle and in particular into technical compartments within the dashboard. Said technical compartments are generally hidden by removable lids connected to the dashboard by fixed joints or by means of screws and metal clutches. Known examples of a dashboard having a compartment closed by a corresponding lid are shown in DE 3833499 and in EP 1048525. In other cases, the dashboard can comprise two compartments each of which closed by corresponding lid. Examples of such solutions are disclosed in generic DE 102008026359, DE 102005057215 and EP 1193129.

The number of lids used to hide said technical compartments is bound to increase, thus making the assembling of the parts of the vehicle's dashboard more and more complex.

Moreover, maintenance operations require the removal of said lids, which increases the risk to damage their fixed joints.

Industrial vehicles usually cover a remarkable number of kilometres, thus the number of times it will be necessary to access to said technical compartments, at least because of routine maintenance, will be remarkable as well.

### Summary of the invention

The aim of the present invention is to provide a dashboard of a vehicle, in particular an industrial vehicle, suitable to simplify the assembling of the lids used to hide the technical compartments and to solve the problem of accessing to said technical compartments during the maintenance operations of the vehicle.

The object of the present invention is a dashboard of a vehicle, in particular of an industrial vehicle, comprising, according to claim 1, a first access lid to a first compartment and a second access lid to a service compartment; said second lid comprising a fixing frame of said second lid to the dashboard, defining a hinge constraint of said second lid, said fixing frame defining a hinge constraint of said first lid.

By connecting said fixing frame to the dashboard also said first and second lid are connected to the said dashboard. Furthermore, a glove compartment is made in said first compartment by means of a bearing surface comprising a document holder, and also a second technical compartment is made wherein a fuse panel or other connections to vehicle systems are housed. Said technical compartment is hidden by said bearing surface whose lower edge is hinged to said fixing frame and whose upper part is connected to the dashboard by means of large-headed screws which are easier to remove.

Furthermore, said bearing surface defines also a closing retainer of said first lid.

A dashboard according to the present invention is not only easy to assemble, but it is also extremely easy to disassemble in order to allow the access to electric parts during the maintenance operations of the vehicle.

The dependent claims describe the preferred embodiments of the invention, and are an integral part of this description.

### Brief description of the Figures

Further characteristics and advantages of the invention will be more apparent in light of a detailed description of preferred, but non-exclusive, embodiments of dashboard of a vehicle, in particular of an industrial vehicle, shown with the help of the drawings that are attached hereto, which are merely illustrative and not limitative, in which:
Fig. 1 shows a front view of a dashboard with a first lid in open position and with a second lid in closed position;
Fig. 2 shows a front view of the dashboard in figure 1, wherein said first lid is in closed position and said second lid is in open position;
Fig. 3 shows a section view referring to the view in the previous figure;
Figs. 4-7 show successive disassembling configurations of the dashboard until some parts are removed.

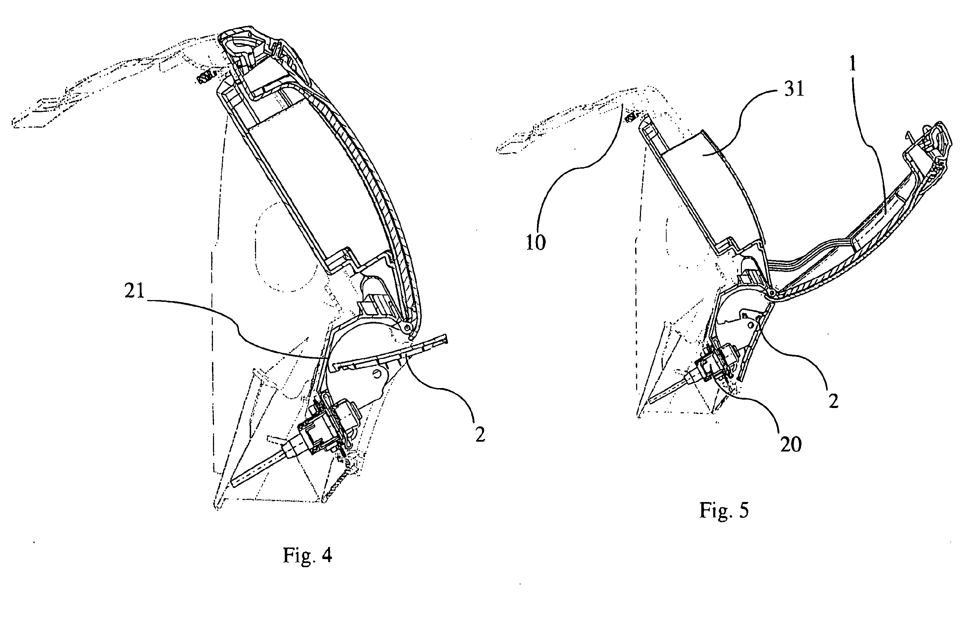

Figures 4-7, if viewed in an inverse succession with respect to their numbers, show successive assembling configurations of some parts of the dashboard.

In the figure, the parts indicated by a broken line are sections or parts of the dashboard that are not part of the invention, with the intent to show the position of the lid that is object of the invention.

In the drawings the same reference numbers and letters identify the same elements or components.

### Detailed description of a preferred embodiment of the invention

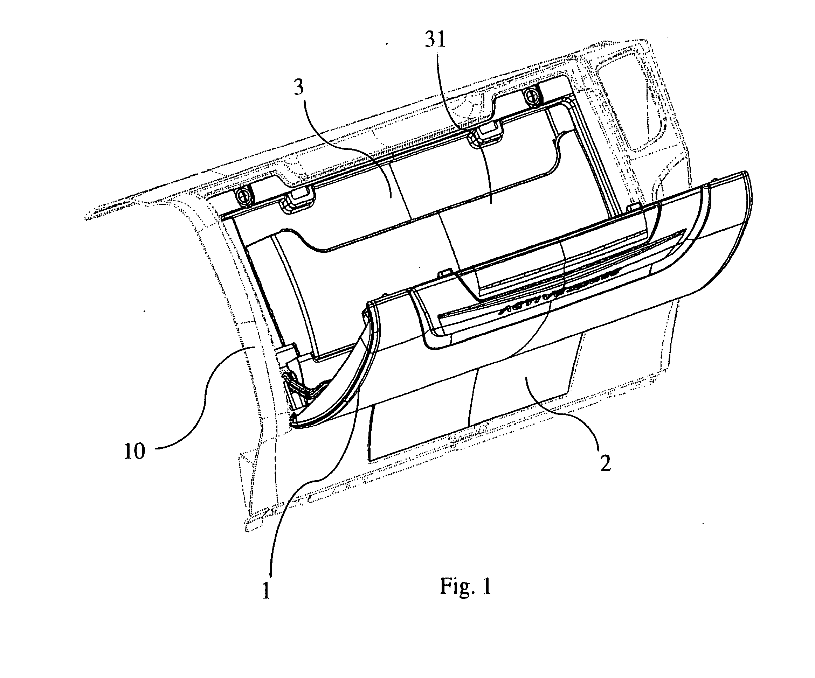

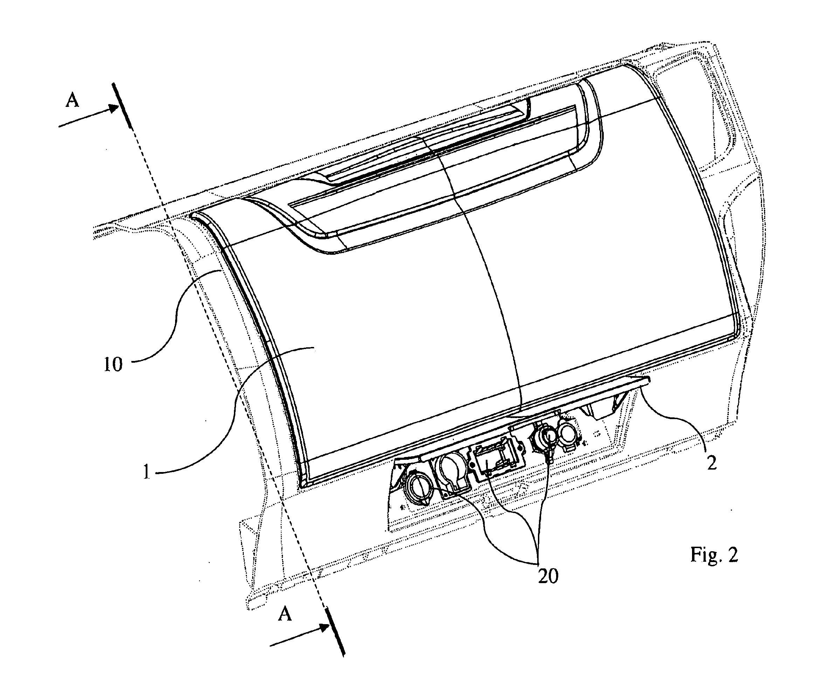

With reference to figures 1 and 2, a dashboard 10 comprises an upper lid 1 and a lower lid 2. The first lid 1 allows the access to a glove compartment realized by means of a document holder 31 fixed to a bearing surface 3.

The second lid 2 allows to access to different connectors, among which one connecting to the vehicle control unit in order to interact with it, and another one defining a power supply socket connected to the electrical system of the vehicle.

Said lids 1 and 2, when mounted on the dashboard, are adjacent according to a horizontal direction, so that a lower edge of first lid 1 is adjacent to the upper edge of the second lid 2.

The lid 2 is connected to a fixing frame 21 shaped as to adhere, at least partially, to a compartment containing said connectors 20 and being of the type that can be tilted around a pivot 22 borne by said fixing frame 21.

The axis of rotation of said second lid 2 is preferably inside the lid's surface.

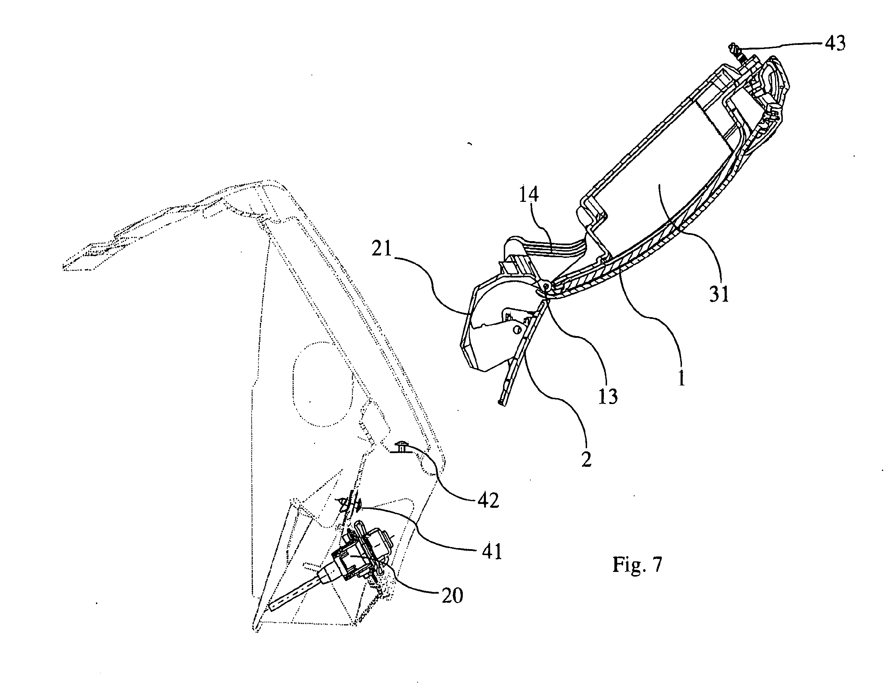

With reference to figure 7, connecting screws 41 and 42 are necessary to firmly connect said fixing frame 20 to the dashboard 10.

Said first lid 1 is hinged to said fixing frame 21 so that it does not interfere with a position of the second lid 2.

A pivot 12 defines a rotation of the first lid 1 with respect to said fixing frame 21.

Thus a fixing frame of a second lid 2 defines a support for a first lid 1.

Also said bearing surface 3 is hinged around the same pivot 12.

In a condition of completely assembled dashboard 10, said bearing surface 3 is constrained to the dashboard not only by means of said hinge 12, but also by means of fixing screws 43, placed near an upper edge of the fixing surface 3.

Said screws, are preferably of the type with a slotted head, so that they can be easily removed by a vehicle's user.

When said bearing surface 3 is mounted on the dashboard 10, it defines or includes, in said upper edge, a hook which is engaged by a lock of said first lid 1.

Preferably, said bearing surface 3 is connected to said pivot 12 by a fixed joint, so that it is easy to remove.

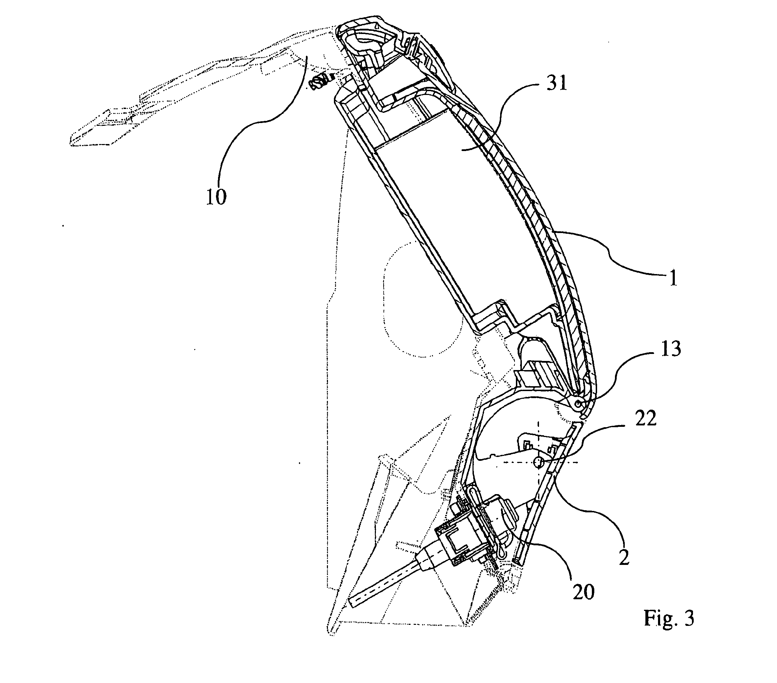

Figure 3 shows a section of the dashboard with both the first 1 and the second lid 2 closed.

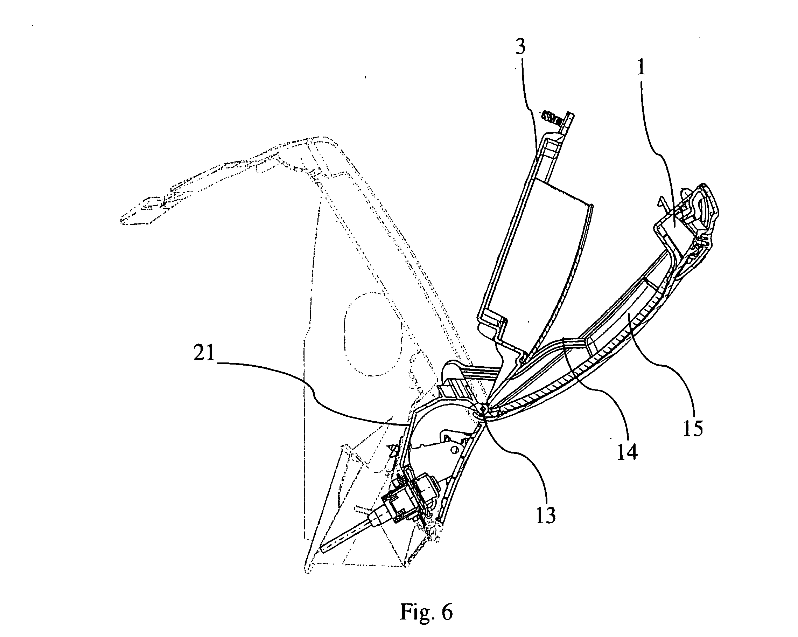

Figure 4 shows said second tilting lid in an open position. Figure 5 shows the first lid 1 in an open position, while figure 6 shows said bearing surface in an intermediate open position, after said screws 43 were unscrewed.

Figure 6 shows said bearing surface being completely open and adhering to said first lid 1 in a position completely open, and wherein the whole defined by said fixing frame 20, by said first 1 and second lid 2 and by said fixing surface 3 are removed with respect to the dashboard 10.

According to the preferred alternative embodiment showed in the figures, the opening of said first lid 1 is limited by an arm 14, whose one end is rotatably constrained to said fixing frame 20 and whose other end is slidingly connected to said first lid 1, wherein suitable sliding guides 15 are made in an internal side of the lid.

According to the present invention, said connectors 20 hidden by means of said second tilting lid 2 are very easy to access. Moreover, said first lid is hinged to the same fixing frame 20 of said second lid 2, therefore in order to remove said first 1 and second 2 lid at the same time, it is enough to remove said frame.

With the aim to spare the number of components, the fact that said bearing surface 3 is hinged to said pivot 13 to which the lower edge of said first lid 1 is hinged, is advantageous.

Thus, when it is necessary to access to the fuse panel, it is extremely easy to disconnect said upper edge of said bearing surface 3 from the dashboard 10 for the forward tilting of said bearing surface 3. Therefore a complete removal of the lid hiding the fuse panel is no longer necessary, which allows the technician to spare a lot of time.

The fact that said bearing surface is hinged in its lower part solves also the problem of keeping the removed parts during the maintenance operations, thus avoiding that the removed parts are lost or damaged.

## Claims

1. Dashboard of a vehicle, in particular of an industrial vehicle, comprising a first access lid (1) to a glove compartment and a second access lid (2) to a connectors compartment, said second lid (2) comprising a fixing frame (21) of said second lid (2) to the dashboard (10), defining a hinge constraint of said second lid (2), said fixing frame (21) defining a hinge constraint of said first lid (1), wherein said glove compartment comprises a bearing surface (3) and a document holder (31) fixed to said bearing surface (3), said bearing surface (3) being hinged to said fixing frame (20) and suitable to occupy at least partially said glove compartment **characterized in that** the same pivot (13) defines a rotation hinge of said first lid and of said bearing surface (3).

2. Dashboard according to claim 1, wherein said first and second lid are adjacent according to a horizontal direction so that a lower edge of said first lid (1) is adjacent to an upper edge of the second lid (2).

3. Dashboard according to claim 1, wherein said bearing surface (3) is hinged in its lower part to said fixing frame (21) and is connected in its upper part to the dashboard by means of screws (43).

4. Dashboard according to any of the previous claims, wherein said first compartment comprises a fuse panel whose access is allowed by the removal or rotation of said bearing surface (3).

5. Dashboard according to claim 4, further comprising an arm (14) whose one end is hinged to said fixing frame (21) and whose other end is slidingly constrained to guides (15) of said first lid (1) in order to limit its opening.

## Patentansprüche

1. Armaturenbrett eines Fahrzeugs, insbesondere eines industriellen Fahrzeugs, umfassend eine erste Zugangsklappe (1) zu einem Handschuhfach und eine zweite Zugangsklappe (2) zu einem Klemmenfach, wobei die zweite Klappe (2) einen Befestigungsrahmen (21) der zweiten Klappe (2) an dem Armaturenbrett (10) umfasst, der einen Scharnierrand der zweiten Klappe (2) definiert, wobei der Befestigungsrahmen (21) einen Scharnierrand der ersten Klappe (1) definiert, wobei das Handschuhfach eine Auflagefläche (3) und einen Dokumentenhalter (31) umfasst, der an der Auflagefläche (3) befestigt ist, wobei die Auflagefläche (3) an dem Befestigungsrahmen (20) angelenkt und geeignet ist, das Handschuhfach zumindest teilweise einzunehmen, **dadurch gekennzeichnet, dass**
der gleiche Drehpunkt (13) ein Drehscharnier der ersten Klappe und der Auflagefläche (3) definiert.

2. Armaturenbrett nach Anspruch 1,
wobei die erste und zweite Klappe in einer horizontalen Richtung benachbart sind, so dass eine untere Kante der ersten Klappe (1) an eine obere Kante der zweiten Klappe (2) angrenzt.

3. Armaturenbrett nach Anspruch 1,
wobei die Auflagefläche (3) an ihrem unteren Teil an dem Befestigungsrahmen (21) angelenkt ist und an ihrem oberen Teil mittels Schrauben (43) mit dem Armaturenbrett verbunden ist.

4. Armaturenbrett nach einem der vorhergehenden Ansprüche,
wobei das erste Fach eine Sicherungstafel umfasst, die durch Entfernung oder Drehung der Auflagefläche (3) zugänglich ist.

5. Armaturenbrett nach Anspruch 4,
das ferner einen Arm (14) umfasst, dessen eines Ende an dem Befestigungsrahmen (21) angelenkt ist und dessen anderes Ende verschiebbar an Führungen (15) der ersten Klappe (1) gefasst ist, um deren Öffnung zu begrenzen.

## Revendications

1. Planche de bord d'un véhicule, en particulier d'un véhicule industriel, comprenant un premier rabat d'accès (1) à une boîte à gants et un second rabat d'accès (2) à un compartiment de connecteurs, ledit second rabat (2) comprenant un cadre de fixation (21) dudit second rabat (2) à la planche de bord (10), définissant une contrainte de charnière dudit second rabat (2), ledit cadre de fixation (21) définissant une contrainte de charnière dudit premier rabat (1), dans laquelle ladite boîte à gants comprend une surface d'appui (3) et un porte-documents (31) fixé à ladite surface d'appui (3), ladite surface d'appui (3) étant articulée, audit cadre de fixation (20) et adaptée pour occuper au moins partiellement ladite boîte à gants, **caractérisée en ce que** le même pivot (13) définit une charnière de rotation dudit premier rabat et de ladite surface d'appui (3).

2. Planche de bord selon la revendication 1, dans laquelle lesdits premier et second rabats sont adjacents selon une direction horizontale de sorte qu'un bord inférieur dudit premier rabat (1) est adjacent à un bord supérieur du second rabat (2).

3. Planche de bord selon la revendication 1, dans laquelle ladite surface d'appui (3) est articulée dans sa partie inférieure audit cadre de fixation (21) et est raccordée dans sa partie supérieure à la planche de bord au moyen de vis (43).

4. Planche de bord selon l'une quelconque des revendications précédentes, dans laquelle ledit premier compartiment comprend un tableau de fusibles dont l'accès est possible en retirant ou en mettant en rotation ladite surface d'appui (3).

5. Planche de bord selon la revendication 4, comprenant en outre un bras (14) dont ladite une extrémité est articulée audit cadre de fixation (21) et dont l'autre extrémité est contrainte de façon coulissante à des guides (15) dudit premier rabat (1) afin de limiter son ouverture.
